# EUROPÄISCHE PATENTSCHRIFT

(11) **EP 3 027 690 B1**
(45) Veröffentlichungstag und Bekanntmachung des Hinweises auf die Patenterteilung: **21.06.2017**
(21) Anmeldenummer: 14744097.8
(22) Anmeldetag: 25.07.2014
(51) Int. Cl.: C09C 1/28, B02C 17/00, C01B 33/02, H01M 4/38, B02C 17/20, H01M 10/052, H01M 4/02, H01M 4/134, H01M 4/1395

(54) **VERFAHREN ZUM ZERKLEINERN VON SILICIUM**
METHOD FOR SIZE-REDUCTION OF SILICON
PROCÉDÉ DE BROYAGE DU SILICIUM

(30) Priorität: 02.08.2013 DE 102013215257
(43) Veröffentlichungstag der Anmeldung: 08.06.2016
(73) Patentinhaber: Wacker Chemie AG, 81737 München (DE)
(72) Erfinder: HANELT, Eckhard, 82269 Geltendorf (DE)
(74) Vertreter: Ege, Markus
(86) Internationale Anmeldenummer: PCT/EP2014/066052
(87) Internationale Veröffentlichungsnummer: WO 2015/014749

(56) Entgegenhaltungen:
- WO-A2-2005/096414
- WO-A2-2009/011981
- US-A1- 2008 054 106

## Beschreibung

Die Erfindung betrifft ein Verfahren zum Zerkleinern von Silicium.

Durch ein solches Verfahren können mikro- und nanoskalige Siliciumpartikel hergestellt werden, die sich als Aktivmaterial in Anoden von Lithium-Ionen-Batterien eignen.

Wiederaufladbare Lithium-Ionen-Batterien sind heute die praktisch verwendbaren elektrochemischen Energiespeicher mit den höchsten Energiedichten von bis zu 250 Wh/kg. Sie werden vor allem im Bereich der tragbaren Elektronik, für Werkzeuge und auch für Transportmittel, wie beispielsweise Fahrräder oder Automobile, genutzt. Insbesondere für die Anwendung in Automobilen ist es jedoch notwendig, die Energiedichte der Batterien weiter deutlich zu steigern um höhere Reichweiten der Fahrzeuge zu erreichen.

Als negatives Elektrodenmaterial ("Anode") wird in Lithium-Ionen-Batterien vor allem graphitischer Kohlenstoff verwendet. Der graphitische Kohlenstoff zeichnet sich durch seine stabilen Zykleneigenschaften und seine, im Vergleich zu Lithiummetall, das in Lithium-Primärzellen verwendet wird, recht hohe Handhabungssicherheit aus. Ein wesentliches Argument für die Verwendung von graphitischem Kohlenstoff in negativen Elektrodenmaterialien liegt in den geringen Volumenänderungen des Wirtsmaterials, die mit der Ein- und Auslagerung von Lithium verbunden sind, d.h. die Elektrode bleibt annähernd stabil. So lässt sich für die Lithiumeinlagerung in graphitischem Kohlenstoff nur eine Volumenzunahme von ca. 10% für die Grenzstöchiometrie von LiC₆ messen. Nachteilig ist jedoch seine relativ niedrige elektrochemische Kapazität von theoretisch 372 mAh/g Graphit, die nur etwa ein Zehntel der mit Lithiummetall theoretisch erreichbaren elektrochemischen Kapazität entspricht.

Silicium bildet mit Lithium binäre elektrochemisch aktive Verbindungen, die einen sehr hohen Lithiumgehalt aufweisen. Das theoretische Maximum an Lithiumgehalt findet man bei Li_{4.4}Si, was einer sehr hohen theoretischen spezifischen Kapazität von 4199 mAh/g Silicium entspricht. Der Nachteil von Silicium als Anodenmaterial ist, dass die Ein- und Auslagerung von Lithium mit einer sehr starken Volumenänderung verbunden ist, die bei maximal 300% liegt. Diese Volumenänderung führt zu einer starken mechanischen Belastung der Kristallite und dadurch zu einem Auseinanderbrechen der Partikel unter Verlust des elektrischen Kontakts.

EP 1730800 B1 offenbart beispielsweise ein Elektrodenmaterial für Lithium-Ionen-Batterien, dadurch gekennzeichnet, dass das Elektrodenmaterial 5-85 Gew.% nanoskalige Siliciumpartikel, die eine BET-Oberfläche von 5 bis 700 m²/g und einen mittleren Primärpartikeldurchmesser von 5 bis 200 nm aufweisen, 0-10 Gew.% Leitruß, 5-80 Gew.% Graphit mit einem mittleren Partikeldurchmesser von 1 µm bis 100 µm und 5-25 Gew.% eines Bindemittels aufweist, wobei die Anteile der Komponenten in Summe maximal 100 Gew.% ergeben.

WO 13040705 A1 offenbart ein Verfahren zur Herstellung von partikulärem Material zur Verwendung in Anoden, umfassend Trockenvermahlung von Partikeln aus einem Element der Kohlenstoff-Silicium-Gruppe zu mikroskaligen Partikeln, Nassvermahlung der in einem Lösungsmittel dispergierten mikroskaligen Partikel zu nanoskaligen Partikeln (10 - 100 nm). Es ist vorgesehen, die Nanopartikel mit einem Kohlenstoff-Präkursor zu mischen, die Mischung zu pyrolisieren, um so die Nanopartikel zumindest teilweise mit leitfähigem Kohlenstoff zu beschichten.

Ein seit langem bekanntes Verfahren zur Herstellung von Si-Nanopartikeln ist die Nassvermahlung einer Suspension aus Si-Partikeln in organischen Lösemitteln mit Hilfe einer Rührwerkskugelmühle gefüllt mit keramischen oder Stahl- Mahlkörpern (T. P. Herbell, T. K. Glasgow and N. W. Orth, "Demonstration of a silicon nitride attrition mill for production of fine pure Si and Si3N4 powders"; Am. Ceram. Soc. Bull., 1984, 63, 9, S. 1176). In dieser Veröffentlichung wird bereits beschrieben, daß beim Mahlen Reaktionen des Mahlguts mit der Suspensionsflüssigkeit stattfinden können. Allerdings wird dabei das Mahlgut abhängig von seiner Aufgabe- und Endgröße durch den Kontakt mit der Mühle und insbesondere den Verschleiß der Mahlkörper typischerweise in der Größenordnung von einigen Gewichtsprozent mit Fremdatomen kontaminiert. Silicium ist ein hartes und sprödes Mahlgut, für das häufig keramische Mahlkörper wie beispielsweise Mahlperlen aus Yttrium-stabilisiertem Zirkonoxid verwendet werden. Nach der Mahlung läßt sich Zirkon über ICP-OES leicht in der Silicium-Dispersion nachweisen.

Metallische Verunreinigungen in der Elektrode wirken sich ggf. negativ auf die Elektrochemie aus, was zur Folge haben kann, dass die Kapazität der Batterie über mehrere Lade- und Entladezyklen deutlich abfällt. Dieser Effekt wird in der Literatur als Fading und irreversibler Kapazitätsverlust bezeichnet.

In US 7883995 B2 ist ein Verfahren zur Herstellung stabiler funktionalisierter Nanopartikel kleiner als 100 nm beansprucht, wobei die Partikel beim Mahlen in einem reaktiven Medium in einer Kugelmühle funktionalisiert werden. Zur Funktionalisierung der Partikeloberfläche werden insbesondere Alkene verwendet, weil die Doppelbindungen besonders leicht mit offenen Bindungen an den Bruchflächen der Partikel reagieren können.

Ein weiteres bekanntes technisches Verfahren zur Herstellung von Partikeln mit geringer Kontamination durch Mahlkörperverschleiß ist die Autogenzerkleinerung in einer Rührwerkmühle.

EP 0700724 A1 offenbart ein Verfahren zum kontinuierlichen autogenen Mahlen eines fließfähigen, unlösliche Partikel unterschiedlichen Durchmessers enthaltenden Behandlungsguts, wobei das Behandlungsgut in einem Mahlraum konzentrisch zu einer Achse in Rotation versetzt wird und wobei unlösliche Partikel größeren Durchmessers im Vergleich zu Partikeln kleineren Durchmessers an der Wand des Mahlraums überproportional aufkonzentriert werden.

Dabei werden Rührwerkskugelmühlen eingesetzt, die jeweils einen zylindrischen Behälter aufweisen, in dem konzentrisch ein hochtourig antreibbares Rührwerk angeordnet ist. Der Mahlbehälter ist zumindest im Wesentlichen mit Mahlkörpern gefüllt. Das Behandlungsgut wird in fließfähiger Form, beispielsweise also mit Wasser aufgeschlämmt, dem Behälter an einem Ende zugeführt und verlässt den Behälter am anderen Ende. Das Gemisch aus Behandlungsgut und Mahlkörpern wird durch das Rührwerk in eine intensive Bewegung versetzt, so dass ein intensives Mahlen stattfindet. Der Kern der Erfindung besteht darin, dass die Partikel mit größerem Durchmesser im Mahlraum aufkonzentriert und dort einerseits gleichsam als Mahlkörper zur Mahlung der Partikel kleineren Durchmessers verwendet und andererseits hierbei selber an ihrer Außenseite abgerieben werden. Es werden also keine eigenständigen artfremden Mahlkörper verwendet. Das Behandlungsgut wird vor der Mahlung außerhalb der Mühle klassiert und zwar in Partikel größeren Durchmessers, die zum Mahlen eingesetzt werden und in Partikel kleineren Durchmessers, die gemahlen werden sollen. Die Partikel größeren Durchmessers werden in den Mahlraum der Rührwerksmühle gegeben und verbleiben dort. Anschließend wird zum Mahlen nur das vorklassierte Behandlungsgut mit Partikeln kleineren Durchmessers durch den Mahlraum geführt. Nachteilig an diesem Verfahren ist, dass die Mahlleistung für kleine Partikel unter einem µm stark abnimmt und spezielle Mühlen mit zusätzlichem Zentrifugaltrennsystem notwendig sind, um das feine Mahlgut von den gröberen Mahlkörpern zu trennen. Der technische Aufwand für die autogene Zerkleinerung steigt mit abnehmender Partikelgröße deutlich.

Bei der autogenen Mahlung werden Mahlkörper aus dem gleichen Material wie das Mahlgut verwendet.

Dies sind in der Regel gröbere Partikel oder Brocken aus einer vorherigen Mahlstufe.

Viele Materialien eignen sich jedoch aufgrund ihrer mechanischen Eigenschaften überhaupt nicht als Mahlkörper. Aus WO2009011981 A2 ist ein Verfahren zum Vermahlen von Silizium mit Stahlkugeln bekannt. Aus US 7789331 B2 ist ein Verfahren zur Mahlung von Siliciumpulver mittels einer Strahlmühle bekannt. Das Mahlgut wird durch Gaswirbel zu Kollisionen untereinander und mit den Wänden der Mühle veranlasst, wodurch das Mahlgut pulverisiert wird. Es ist offenbart, dass eine Partikelverteilung von 0,2 bis 20 µm erreicht wurde. Als Mahlgut wird auch polykristallines Siliciumgranulat vorgeschlagen.

Allerdings hat sich bei eigenen Versuchen gezeigt, dass diese Partikelverteilung so zu verstehen ist, dass der Median der Verteilung bei ungefähr 10 µm liegt (mit d₁₀ = ca. 5 µm und d₉₀ = ca. 17µm). Kleinere Partikel mit einer Größe von weniger als 1 µm sind üblicherweise höchstens zu wenigen Prozent in der Partikelverteilung enthalten. Dies hängt damit zusammen, dass beim trockenen Mahlen wegen der zunehmenden Adhäsion Partikel mit einer Größe von weniger als 1 µm stark agglomerieren. Daher wird beim trockenen Mahlen sehr kleiner Partikel die Mahlenergie hauptsächlich zum Aufbrechen der Agglomerate benötigt, die eigentlich beabsichtigte Vermahlung der Primärpartikel selbst findet im Wesentlichen nicht mehr statt. Somit ist die Herstellung nanoskaliger Partikel durch Trockenvermahlung von Silicium kaum zu bewerkstelligen und unwirtschaftlich.

Aus dieser Problematik ergab sich die Aufgabenstellung der Erfindung.

Die Aufgabe wird gelöst durch ein Verfahren zum Zerkleinern von Silicium, bei dem ein Gemisch enthaltend eine Suspension mit einem zu zerkleinernden Silicium und Mahlkörper aus Silicium im Mahlraum einer Mahlkörpermühle in Bewegung versetzt werden.

Bevorzugte Ausführungsformen des Verfahrens sind den abhängigen Ansprüchen und der nachfolgenden Beschreibung des Verfahrens zu entnehmen,

Durch die Bewegungen des Gemisches im Mahlraum der Mahlkörpermühle wird das Silicium zerkleinert.

Das beim erfindungsgemäßen Verfahren entstehende zerkleinerte bzw. vermahlene Silicium kann als Aktivmaterial in der Anode einer Lithium-Ionen-Batterie verwendet werden.

Das Verfahren ist geeignet, Siliciumpartikel mit einer volumengewichteten Partikelgrößenverteilung mit 50 nm < d₅₀ < 1000 nm und geringen metallischen Verunreinigungen von weniger als 1 Gew.% zu erzeugen. Jene Siliciumpartikel kommen als Aktivmaterial in der Anode einer Lithium-Ionen-Batterie zum Einsatz.

Die Bestimmung der Partikelgrößenverteilung erfolgt im Rahmen dieser Erfindung nach ISO 13320 mittels statischer Laserstreuung mit einem Horiba LA 950. Dabei muß bei der Vorbereitung der Proben besondere Sorgfalt auf die Dispergierung der Partikel in der Meßlösung aufgewendet werden, um statt Einzelpartikel nicht die Größe von Agglomeraten zu messen. Für die hier untersuchten Si-Partikel wurden stark verdünnte Suspensionen in Ethanol hergestellt, die vor der Messung 30 min mit 250 W Ultraschall behandelt wurden (beispielsweise in einem Hielscher Ultraschall-Laborgerät Modell UIS250v mit Sonotrode LS24d5)

Metallische Verunreinigungen im Sinne dieses Patents sind ungewollte Kontaminationen des Siliziums mit Metallatomen aus dem Herstellprozeß. Sie sind zu unterscheiden von gewollten Dotierungen des Siliziums mit Fremdatomen oder Silicium/Metall-Legierungen.

Die Bestimmung der metallischen Verunreinigungen erfolgt im Rahmen dieser Erfindung mittels ICP (inductively coupled plasma)-Emissionspektrometrie (Optima 7300 DV, Fa. Perkin Elmer). Die Proben werden dazu in einer Mikrowelle (Microwave 3000, Fa. Anton Paar) sauer aufgeschlossen (HF/HNO₃). Die ICP-OES-Bestimmung orientiert sich an der ISO 11885 "Wasserbeschaffenheit - Bestimmung von ausgewählten Elementen durch induktiv gekoppelte Plasma-Atom-Emissionsspektrometrie (ICP-OES) (ISO 11885:2007); Deutsche Fassung EN ISO 11885:2009", die zur Untersuchung saurer, wässriger Lösungen eingesetzt wird (z.B. angesäuerte Trinkwasser-, Abwasser- und andere Wasserproben, Königswasserextrakte von Böden und Sedimenten).

Mahlkörper im Sinne dieser Erfindung sind in der Mühle frei bewegliche Körper, die das Mahlgut idealerweise nur zerkleinern, aber dabei selbst nicht oder nur unwesentlich zerstört werden. Die Mahlkörper können jedoch einem allmählichen Verschleiß unterliegen, so dass sie nach einer gewissen Mahldauer ersetzt werden sollten.

Der Median d₅₀ der Durchmesser der Mahlkörper aus Silicium ist bevorzugt 10 bis maximal 1000 mal größer ist als der d₉₀ -Wert der Verteilung des eingesetzten Mahlguts, wobei kleinere Mahlkörper für die Herstellung eines feineren Mahlguts günstiger sind. Die maximale Partikelgröße des Ausgangsmaterials bestimmt die minimale Mahlkörpergröße und damit die erreichbare Feinheit des Endprodukts.

Besonders bevorzugt sind Mahlkörper, deren Durchmesser d₅₀ 20 bis 200-mal größer ist als der d₉₀ -Wert der Ausgangsverteilung des Mahlguts.

Der Median der volumengewichteten Größenverteilung der für die Herstellung von Siliciumpartikeln mit 0,02 µm < d₅₀ < 10 µm benötigten Mahlkörper liegt im Bereich von 50 µm < d₅₀ < 5 mm und bevorzugt im Bereich von 100 µm < d₅₀ < 2 mm.

Die relative Breite der volumengewichteten Größenverteilung der Mahlkörper ist vorzugsweise (d₉₀ - d₁₀) / d₅₀ < 1 und besonders bevorzugt < 0,5.

Die Werte d₁₀, d₅₀ und d₉₀ stehen hier und an anderer Stelle für die 10%-, 50%- und 90%-Perzentilwerte der volumengewichteten Durchmessergrößenverteilungen der Mahlkörper oder des Mahlguts.

Bei den Mahlkörpern kann es sich um Silicium-Splitt handeln, dessen Schüttdichte typischerweise ca. 0,9 bis 1,2 g/cm³ beträgt.

Vorzugsweise zeichnen sich die beim Mahlverfahren eingesetzten Mahlkörper dadurch aus, dass sie näherungsweise kugelförmig sind, ein spezifisches Gewicht von 2,2 bis 2,4 g/cm³ und eine Schüttdichte von 1,2 bis 1,7 g/cm³ aufweisen, wobei deren volumengewichtete Größenverteilung im Bereich von 50 µm < d₅₀ < 5 mm liegt und eine relative Breite der Verteilung von (d₉₀ - d₁₀) / d₅₀ < 1 hat.

Diese Eigenschaften erfüllt insbesondere polykristallines Siliciumgranulat. Wie später gezeigt wird, ist die autogene Mahlung mit einem Siliciumgranulat in der spezifizierten Größe besonders vorteilhaft, da es deutlich schneller zu nanoskaligen Siliciumpartikeln mit der gewünschten Reinheit führt als die Mahlung mit Silicium-Splitt als Mahlkörper.

Außerdem war überraschend, dass dieses Granulat unter den hohen mechanischen Belastungen in der Mühle nicht zerbricht und im Vergleich zum Silicium-Splitt einem wesentlich geringeren Verschleiß unterliegt. Das Granulat lässt sich deshalb einfacher vom Mahlgut trennen als der Splitt und der Mahlprozess ist deutlich stabiler.

Die bei der autogenen Nassmahlung verwendeten näherungsweise kugelförmigen Mahlkörper aus Silicium haben eine Sphärizität ψ von bevorzugt 0,8 < ψ <= 1.

Dabei ist die Sphärizität ψ nach der Definition von Wadell das Verhältnis aus der Oberfläche einer Kugel gleichen Volumens zur tatsächlichen Oberfläche eines Körpers. Die maximale Sphärizität ψ = 1 entspricht der idealen Kugelform.

Besonders bevorzugt haben die näherungsweise kugelförmigen Mahlkörpern aus Silicium eine Sphärizität von 0,9 < ψ <= 1.

Die internationale Norm der "Federation Europeenne de la Manutention" gibt in der FEM 2.581 einen Überblick, unter welchen Gesichtspunkten ein Schüttgut zu betrachten ist. In der Norm FEM 2.582 werden die allgemeinen und spezifischen Schüttguteigenschaften hinsichtlich der Klassifizierung definiert. Kennwerte, die die Konsistenz und den Zustand des Gutes beschreiben sind zum Beispiel Kornform und Korngrößenverteilung (FEM 2.581 / FEM 2.582: General characteristics of bulk products with regard to their classification and their symbolization).

Nach DIN ISO 3435 können Schüttgüter in Abhängigkeit der Beschaffenheit der Kornkanten in 6 unterschiedliche Kornformen untergliedert werden:
I Scharfe Kanten mit ungefähr gleichen Ausmaßen in den drei Dimensionen (Bsp.: Würfel)
II Scharfe Kanten, deren eine deutlich länger ist als die anderen beiden (Bsp.: Prisma, Klinge)
III Scharfe Kanten, deren eine deutlich kleiner ist als die beiden anderen (Bsp.: Platte, Schuppen)
IV Runde Kanten mit ungefähr gleichen Ausmaßen in den drei Dimensionen (Bsp.: Kugel)
V Runde Kanten, in einer Richtung deutlich größer als in den anderen beiden (Bsp.: Zylinder, Stange)
VI Faserig, fadenförmig, lockenförmig, verschlungen

Gemäß dieser Klassifizierung von Schüttgütern handelt es sich bei den zur autogenen Nassmahlung verwendeten Mahlkörpern aus Silicium vorzugweise um Körper mit der Kornform IV.

Weil die Masse des Mahlguts wesentlich höher ist als der Abrieb der Mahlkörper, wird die Kontamination des Mahlguts durch eventuelle metallische Verunreinigungen in den Mahlkörpern stark verdünnt. Bevorzugt sind dennoch möglichst reine Mahlkörper.

Die näherungsweise kugelförmigen Mahlkörper aus Silicium enthalten deshalb vorzugsweise insgesamt weniger als 5 Gew.%, besonders bevorzugt weniger als 1 Gew.% und ganz besonders bevorzugt weniger als 0,1 Gew.% metallische Verunreinigungen.

Die bei der autogenen Nassmahlung verwendeten näherungsweise kugelförmigen Mahlkörper aus Silicium können durch verschiedene Verfahren hergestellt werden.

Beispielsweise können beliebig geformte Siliciumpartikel mechanisch oder durch Aufschmelzen und Abkühlen verrundet werden.

Die mechanische Verrundung kann beispielsweise durch autogenes Abschleifen zum Beispiel durch Bewegung einer größeren Menge von beliebig geformten Siliciumpartikeln in einem Rührkessel oder einer Rührwerkmühle erfolgen.

Das Aufschmelzen und Abkühlen kann beispielsweise in einem heißen Plasma geschehen, durch das die Siliciumpartikel einzeln hindurchfliegen. Ein geeignetes Verfahren ist in WO 2011125250 A1 beschrieben.

Die bei der autogenen Nassmahlung verwendeten näherungsweise kugelförmigen Mahlkörper aus Silicium können auch direkt durch Gasphasenabscheidung von Silicium-haltigen Molekülen wie beispielsweise Silanen hergestellt werden. Dies kann beispielsweise in einem Fließbettreaktor durchgeführt werden. Ein geeignetes Herstellungsverfahren ist in EP 0896952 A1 offenbart.

Die bei der autogenen Nassmahlung verwendeten näherungsweise kugelförmigen Mahlkörper aus Silicium sind also vorzugsweise ein Granulat, das durch Gasphasenabscheidung in einem Fließbettreaktor hergestellt wurde.

Ein solches Granulat hat typischerweise weniger als 10 µg/g metallische Verunreinigungen.

Für die Verwendung als Mahlkörper wird eine zur angestrebten Partikelgröße des Mahlguts passenden Fraktion des Granulats beispielsweise durch Sieben selektiert.

Das bei der Vermahlung eingesetzte Mahlgut, also das zu zerkleinernde Silicium, hat vorzugsweise eine volumengewichtete Partikelgrößenverteilung mit einem d₉₀ < 300 µm, besonders bevorzugt d₉₀ < 100 µm und ganz besonders bevorzugt d₉₀ < 30 µm.

Als Ausgangsmaterial zur Mahlung wird bevorzugt elementares Silicium eingesetzt, weil dieses die höchste Speicherkapazität für Lithiumionen aufweist.

Unter elementarem Silicium ist hochreines Polysilicium, mit geringem Anteil an Fremdatomen (wie beispielsweise B, P, As) gezielt dotiertes Silicium, aber auch metallurgisches Silicium, welches eine spezifizierte Menge elementarer Verunreinigung (wie beispielsweise Fe, Al, Ca) aufweisen kann, zu verstehen.

Als Ausgangsmaterial kann jedoch auch ein Siliciumoxid oder eine binäre, ternäre oder multinäre Silicium/Metall-Legierung (mit beispielsweise Li, Na, K, Sn, Ca, Co, Ni, Cu, Cr, Ti, Al, Fe) zum Einsatz kommen.

Falls das Ausgangsmaterial ein Siliciumoxid enthält, dann liegt die Stöchiometrie des Oxids SiOx bevorzugt im Bereich 0 < x < 1,3. Falls das Ausgangsmaterial ein Siliciumoxid mit höherer Stöchiometrie enthält, dann ist dessen Schichtdicke auf der Oberfläche bevorzugt kleiner als 10 nm.

Wenn das Silicium im Ausgangsmaterial mit einem Alkalimetall M legiert ist, dann liegt die Stöchiometrie der Legierung MxSi bevorzugt im Bereich 0 < x < 5.

Die anderen metallischen Verunreinigungen des Ausgangsmaterials betragen vorzugsweise insgesamt weniger als 1 Gew.%, besonders bevorzugt weniger als 0,5 Gew.% und ganz besonders bevorzugt weniger als 0,1 Gew.%.

Für viele Anwendungen sind die an der Oberfläche durch kovalent angebundene organische Gruppen funktionalisierten Si-Nanopartikel besonders geeignet, weil die Oberflächenspannung der Partikel durch eine entsprechende Funktionalisierung optimal an das die Partikel umgebende Medium wie beispielsweise die für die Herstellung von Elektrodenbeschichtungen verwendeten Lösemittel und Binder angepasst werden kann.

Zur Mahlung des Siliciums einer Suspension können verschiedene organische oder anorganische Flüssigkeiten oder flüssige Gemische mit einer gemäß DIN 53019 bei Raumtemperatur (20°C) und 1 bar Luftdruck bestimmten Viskosität von weniger als 100 mPas, bevorzugt weniger als 10 mPas verwendet werden.

Bevorzugt ist die Flüssigkeit inert oder schwach reaktiv gegenüber Silicium.

Besonders bevorzugt ist die Flüssigkeit organisch und enthält weniger als 5% Wasser, besonders bevorzugt weniger als 1% Wasser.

Bevorzugt enthalten die Flüssigkeiten polare Gruppen.

Besonders bevorzugt sind Alkohole.

Die zum Mahlen verwendete Suspension kann zusätzliche Additive enthalten, die mit der Siliciumoberfläche reagieren und diese so mit organischen oder anorganischen Gruppen funktionalisieren.

Die zum Mahlen verwendete Suspension kann weitere Additive enthalten, die das Dispergieren der Partikel in der Suspension verbessern.

Es konnte gezeigt werden, dass die Verwendung von durch autogene Nassvermahlung von Silicium hergestellten Siliciumpartikeln in den Anoden von Lithium-Ionen-Batterien zu einem guten Zyklenverhalten führt.

Diese Elektroden weisen eine sehr hohe reversible Kapazität auf, die auch im Laufe des Zyklens annähernd konstant bleibt, so dass nur ein geringfügiges Fading zu beobachten ist.

Ferner zeigte sich, dass durch den Einsatz dieser nanoskaligen Siliciumpartikel das Elektrodenmaterial eine deutlich verbesserte mechanische Stabilität aufweist.

Überraschend war, dass der irreversible Kapazitätsverlust während des ersten Zyklus verringert werden konnte.

Ein Elektrodenmaterial für eine LithiumIonen-Batterie enthält die durch das erfindungsgemäße Verfahren zerkleinerten Siliciumpartikel mit einer volumengewichteten Partikelgrößenverteilung von 50 nm < d₅₀ < 1000 nm und metallischen Verunreinigungen von weniger als 1 Gew.%.

Unter Elektrodenmaterial wird ein Stoff oder eine Mischung aus zwei oder mehreren Stoffen verstanden, der/die es erlaubt, durch Oxidationsund/oder Reduktionsreaktionen elektrochemische Energie in einer Batterie zu speichern. Je nachdem, ob die elektrochemische Reaktion, welche in der geladenen Batterie Energie liefert eine Oxidation oder Reduktion ist, spricht man von negativem oder positivem Elektrodenmaterial oder auch von Anoden- oder Kathodenmaterial. Das Elektrodenmaterial enthält vorzugsweise eine Mischung der erfindungsgemäß hergestellten Siliciumpartikel mit wenig metallischen Verunreinigungen, Graphit, eine nanoskalige elektrisch leitenden Komponente, ein Bindemittel und ggf. weitere Komponenten bzw. Hilfsstoffe wie Porenbildner, Dispergiermittel oder Dotiermittel (z.B. elementares Lithium).

Die Siliciumpartikel im Elektrodenmaterial können aus elementarem Silicium, einem Siliciumoxid oder einer binären, ternären oder multinären Silicium/Metall-Legierung (mit beispielsweise Li, Na, K, Sn, Ca, Co, Ni, Cu, Cr, Ti, Al, Fe) bestehen.

Falls die Siliciumpartikel ein Siliciumoxid enthalten, dann liegt die Stöchiometrie des Oxids SiOx bevorzugt im Bereich 0 < x < 1,3. Falls die Siliciumpartikel ein Siliciumoxid mit höherer Stöchiometrie enthalten, dann ist dessen Schichtdicke auf der Oberfläche bevorzugt kleiner als 10 nm.

Wenn nicht aggregierte Siliciumpartikel mit einem Alkalimetall M legiert sind, dann liegt die Stöchiometrie der Legierung MₓLi bevorzugt im Bereich 0 < x < 5.

Besonders bevorzugt für die Anwendung in Elektrodenmaterialien sind erfindungsgemäß hergestellte Siliciumpartikel, die im Inneren mehr als 80 mol% Silicium und weniger als 20 mol% Fremdatome, ganz besonders bevorzugt weniger als 10 mol% Fremdatome enthalten.

Die durch den Herstellprozess bedingten metallischen Verunreinigungen betragen insgesamt weniger als 1 Gew.%, bevorzugt weniger als 0,5 Gew.% und besonders bevorzugt weniger als 0,1 Gew.%.

Die Oberfläche der nanoskaligen Siliciumpartikel kann dagegen abhängig vom Herstellprozess durch eine Oxidschicht oder durch andere anorganische und organische Gruppen abgedeckt sein.

Besonders bevorzugte Siliciumpartikel mit wenig metallischen Verunreinigungen tragen auf der Oberfläche Si-OH- oder Si-H-Gruppen oder kovalent angebundene organischen Gruppen wie beispielsweise Alkoxy-Gruppen oder Alkyl-Gruppen.

In der Literatur wurden bisher unterschiedliche Aussagen zur optimalen Größe der nanoskaligen Siliciumpartikel in einem Elektrodenmaterial publiziert. In vielen Fällen hing die Beurteilung davon ab, welche Partikelquellen jeweils für die Herstellung der Elektroden zur Verfügung standen. Bei der Gasphasenabscheidung werden typischerweise Partikel produziert, deren Durchmesser kleiner als 100 nm ist, wogegen bei der Mahlung der Bereich über 100 nm besser zugänglich ist.

Bei den eigenen Untersuchungen wurde gefunden, dass die Siliciumpartikel bevorzugt nicht aggregiert sind und ihre volumengewichtete Partikelgrößenverteilung zwischen den Durchmesser-Perzentilen d₁₀ > 20 nm und d₉₀ < 2000 nm liegt und eine Breite d₉₀-d₁₀ < 1200 nm hat.

Besonders bevorzugt liegt die Partikelgrößenverteilung zwischen d₁₀ > 30 nm und d₉₀ < 1000 nm und hat eine Breite d₉₀-d₁₀ < 600 nm, ganz besonders bevorzugt sind d₁₀ > 40 nm bis d₉₀ < 500 nm und d₉₀-d₁₀ < 300 nm.

Der Median der volumengewichteten Partikelgrößenverteilung liegt bevorzugt im Bereich 50 nm < d₅₀ < 500 nm.

Um die Übergangswiderstände innerhalb der Elektrode und zwischen Elektrode und Stromableiter zu reduzieren, kann das Elektrodenmaterial 0 - 40 Gew.% einer elektrisch leitfähigen Komponente mit nanoskaligen Strukturen < 800 nm enthalten.

Bevorzugt enthält das Elektrodenmaterial 0 - 30 Gew.%, besonders bevorzugt 0 - 20 Gew.% dieser elektrisch leitfähigen Komponente.

Eine bevorzugte elektrisch leitfähige Komponente mit nanoskaligen Strukturen ist ein Leitruß, der Primärpartikel mit einer volumengewichteten Partikelgrößenverteilung zwischen den Durchmesser-Perzentilen d₁₀ = 5 nm und d₉₀ = 200 nm enthält, die kettenartig verzweigt sein und bis zu µm-große Strukturen bilden können.

Andere bevorzugte elektrisch leitfähige Komponenten mit nanoskaligen Strukturen sind Graphene oder Kohlenstoff-Nanoröhrchen mit einem Durchmesser von 0,4 bis 200 nm.

Besonders bevorzugte Kohlenstoff-Nanoröhrchen haben einen Durchmesser von 2 bis 100 nm, ganz besonders bevorzugt sind Durchmesser von 5 bis 30 nm.

Beim Einsatz von Kohlenstoff-Nanoröhrchen als elektrisch leitfähige Komponente im Elektrodenmaterial muss darauf geachtet werden, dass diese vor der Verwendung in einer Elektrodentinte oder -paste sehr gut in einem geeigneten Lösemittel dispergiert werden, damit sich diese gleichmäßig im Elektrodenmaterial und insbesondere auf der Oberfläche der die Si-Nanopartikel verteilen.

Bevorzugte Bindemittel sind Polyvinylidenfluorid, Polytetrafluorethylen, Polyolefine, oder thermoplastische Elastomere, insbesondere Ethylen / Propylen-Dien-Terpolymere. In einer besonderen Ausführungsform handelt es sich um modifizierte Zellulose als Bindemittel.

Die Verarbeitung der Komponenten des Elektrodenmaterials zu einer Elektrodentinte bzw. -paste kann in einem Lösungsmittel, wie Wasser, Hexan, Toluol, Tetrahydrofuran, N-Methyl-pyrrolidon, N-Ethyl-pyrrolidon, Aceton, Ethylacetat, Dimethylsulfoxid, Dimethylacetamid oder Ethanol, oder Lösungsmittelgemischen unter Verwendung von Rotor-Stator-Maschinen, Hochenergiemühlen, Planetenkneter, Rührwerkskugelmühlen, Rüttelplatten oder Ultraschallgeräten erfolgen.

Die Elektrodentinte oder -paste wird bevorzugt in einer Trockenschichtdicke von 2 µm bis 500 µm, besonders bevorzugt von 10 µm bis 300 µm auf eine Kupferfolie oder einen anderen Stromsammler aufgerakelt.

Andere Beschichtungsverfahren, wie Rotationsbeschichtung (Spin-Coating), Tauchbeschichtung, Streichen, oder Sprühen, können ebenso verwendet werden.

Vor dem Beschichten der Kupferfolie mit dem Elektrodenmaterial kann eine Behandlung der Kupferfolie mit einem handelsüblichen Primer, z.B. auf der Basis von Polymerharzen erfolgen. Er erhöht die Haftung auf dem Kupfer, besitzt aber selbst praktisch keine elektrochemische Aktivität.

Das Elektrodenmaterial wird bis zur Gewichtskonstanz getrocknet. Die optimale Trocknungstemperatur richtet sich nach den eingesetzten Komponenten und dem verwendeten Lösungsmittel. Sie liegt bevorzugt zwischen 20°C und 300°C, besonders bevorzugt zwischen 50°C und 150°C.

Abschließend werden die Elektrodenbeschichtungen kalandriert, um eine definierte Porosität einzustellen.

Eine Lithium-Ionen-Batterie umfasst eine Kathode, eine Anode, eine zwischen Kathode und Anode angeordnete Membran als Separator, einen Lithium-Ionen enthaltenden Elektrolyten, wobei die Anode ein patentgemäßes Elektrodenmaterial enthält.

Eine solche Lithium-Ionen-Batterie umfasst vorzugsweise weiterhin zwei Anschlüsse an den Elektroden, und ein Anode, Kathode, Separator und Elektrolyt aufnehmendes Gehäuse.

Als bevorzugtes Kathodenmaterial werden Li-Folie, Lithiumcobaltoxid, Lithiumnickeloxid, Lithiumnickelcobaltoxid (dotiert und nicht dotiert), Lithiummanganoxid (Spinell), Lithiumnickelcobaltmanganoxide, Lithiumnickelmanganoxide, Lithiumeisenphosphat, Lithiumcobaltphosphat, Lithiummanganphosphat, Lithiumvanadiumphosphat, oder Lithiumvanadiumoxide eingesetzt.

Der Separator ist eine elektrisch isolierende, für Ionen durchlässige Membran, wie sie in der Batterieherstellung bekannt ist. Der Separator trennt die erste Elektrode von der zweiten Elektrode.

Der Elektrolyt ist eine Lösung eines Lithiumsalzes (= Leitsalz) in einem aprotischen Lösungsmittel. Einsetzbare Leitsalze sind zum Beispiel Lithiumhexafluorophosphat, Lithiumhexafluoroarsenat, Lithiumperchlorat, Lithiumtetrafluoroborat, LiCF₃SO₃, LiN(CF₃SO₂) oder Lithiumborate.

Die Konzentration des Leitsalzes liegt vorzugsweise zwischen 0,5 mol/l und der Löslichkeitsgrenze des entsprechenden Salzes. Besonders bevorzugt beträgt sie 0,8 mol/l bis 1,2 mol/l.

Als Lösungsmittel können cyclische Carbonate, Propylencarbonat, Ethylencarbonat, Dimethylcarbonat, Diethylcarbonat, Ethylmethylcarbonat, Dimethoxyethan, Diethoxyethan, Tetrahydrofuran, 2-Methyltetrahydrofuran, gamma-Butyrolacton, Dioxolan, Acetonitril, org. Kohlensäureester oder Nitrile, einzeln oder als Mischungen daraus, eingesetzt werden.

Bevorzugt enthält der Elektrolyt einen Filmbildner, wie Vinylencarbonat, Fluorethylencarbonat, etc., wodurch eine signifikante Verbesserung der Zyklenfestigkeit der Sihaltigen Elektrode erreicht werden kann.

Dies wird hauptsächlich der Bildung einer festen Elektrolytzwischenphase auf der Oberfläche von aktiven Partikeln zugeschrieben.

Der Anteil des Filmbildners im Elektrolyten beträgt zwischen 0,1 Gew.% und 20,0 Gew.%, bevorzugt zwischen 0,2 Gew.% und 15,0 Gew.%, besonders bevorzugt zwischen 0,5 Gew.% und 10 Gew.%.

Die Lithiumionenbatterie kann in allen üblichen Formen in gewickelter, gefalteter oder gestapelter Form hergestellt werden.

Alle zur Herstellung der Lithiumionenbatterie, wie oben beschrieben, benutzten Stoffe und Materialien sind bekannt. Die Herstellung der Teile der Batterie und ihre Zusammenfügung zur Batterie erfolgt nach den auf dem Gebiet der Batterieherstellung bekannten Verfahren.

Die Erfindung wird nachfolgend anhand von **Beispielen** erläutert.

### Beispiele

### Beispiel 1

Aus einem näherungsweise kugelförmigen Polysilicium-Granulat (Hersteller Wacker Chemie AG), das weniger als 10 µg/g metallische Verunreinigungen enthält, wurde eine Fraktion von 0,85 mm bis 1,25 mm ausgesiebt.

30 ml dieser Fraktion wurden in einen mit Zirkonoxid ausgekleideten Mahlbecher mit 50 ml Inhalt gefüllt.

Es wurde eine Mischung aus 16 g Ethanol (Reinheit 99,9%) und 10 g eines Siliciumpulvers mit weniger als 10 µg/g metallischen Verunreinigungen hergestellt.

Das Siliciumpulver wurde nach dem Stand der Technik durch Vormahlung eines groben Si-Splitts aus der Wacker Produktion von Solarsilizium in einer Fließbettstrahlmühle (Netzsch-Condux CGS16 mit 90 m³/h Stickstoff bei 7 bar als Mahlgas) hergestellt. Das dabei gewonnen Produkt hatte eine Partikelgrößenverteilung von d₁₀ = 5 µm, d₅₀ = 11 µm und d₉₀ = 18 µm, die durch statische Laserstreuung mit einem Horiba LA 950 gemessen wurde.

Diese Mischung wurde 20 min gerührt bis der gesamte Feststoff in der Suspension fein verteilt vorlag und anschließend zum Granulat in den Mahlbecher gegeben.

Der Mahlbecher wurde unter Stickstoff als Schutzgas fest verschlossen.

Er wurde in eine Retsch Planetenkugelmühle PM 100 eingesetzt und dann 240 min mit einer Drehzahl von 400 U/min bewegt. Die Mahlung wurde alle 30 min für 10 min unterbrochen, um den Mahlbecher abkühlen zu lassen.

Nach dem Mahlvorgang wurde der Mahlbecher in ein Sieb mit 0,5 mm Maschenweite entleert, um die Suspension mit den gemahlenen Si-Partikeln vom Polysilicium-Granulat zu trennen.

Dazu wurde Ethanol zugesetzt, so dass die Feststoffkonzentration der Suspension anschließend ca. 20 Gew.% betrug.

Die Messung der Partikelverteilung durch statische Laserstreuung mit einem Horiba LA 950 ergab d₁₀ = 0,24 µm, d₅₀ = 0,59 µm und d₉₀ = 1,32 µm in einer stark verdünnten Suspension in Ethanol.

Ca. 5 ml der Suspension wurden 16 h in einem Vakuumtrockenschrank bei 120°C und 20 mbar getrocknet.

Die REM-Aufnahmen des gemahlenen Si-Pulvers zeigten, dass die Probe aus einzelnen, nicht aggregierten, splitterförmigen Partikeln besteht.

REM-Aufnahmen des Polysilicium-Granulats zeigten keine sichtbaren Veränderungen an den Mahlkörpern.

Mit dem getrockneten Pulver aus der Suspension wurde ICP-Emissionsspektroskopie in einem Perkin Elmer Optima 7300 DV durchgeführt.

Es wurden keine metallischen Kontaminationen oberhalb der Nachweisgrenze von 10 µg/g gefunden.

### Vergleichsbeispiel 1a

Der Versuch aus **Beispiel 1** wurde wiederholt, wobei das Polysilicium-Granulat durch mit Yttriumoxid teilstabilisierte Zirkonoxid-Mahlperlen (Alpine Power Beads YSZ 0,8 - 1 mm) ersetzt wurde.

Die Messung der Partikelverteilung durch statische Laserstreuung mit einem Horiba LA 950 ergab d₁₀ = 0,10 µm, d₅₀ = 0,18 µm und d₉₀ = 0,33 µm in einer stark verdünnten Suspension in Ethanol.

Ca. 5 ml der Suspension wurden 16 h in einem Vakuumtrockenschrank bei 120°C und 20 mbar getrocknet.

Die REM-Aufnahmen des gemahlenen Si-Pulvers zeigten, dass die Probe aus einzelnen, nicht aggregierten, splitterförmigen Partikeln besteht.

REM-Aufnahmen der Zirkonoxid-Mahlperlen zeigten keine sichtbaren Veränderungen an den Mahlkörpern.

Die ICP-Emissionsspektroskopie in einem Perkin Elmer Optima 7300 DV ergab einen Anteil von 10 mg/g Zirkon in der Probe.

### Vergleichsbeispiel 1b

Der Versuch aus **Beispiel 1** wurde wiederholt, wobei das Polysilicium-Granulat durch Stahlkugeln (Netzsch SteelBeads Micro 1,0 mm) ersetzt wurde.

Die Messung der Partikelverteilung durch statische Laserstreuung mit einem Horiba LA 950 ergab d₁₀ = 0,17 µm, d₅₀ = 0,31 µm und d₉₀ = 1,03 µm in einer stark verdünnten Suspension in Ethanol.

Ca. 5 ml der Suspension wurden 16 h in einem Vakuumtrockenschrank bei 120°C und 20 mbar getrocknet.

Die REM-Aufnahmen des gemahlenen Si-Pulvers zeigten, dass die Probe aus einzelnen, nicht aggregierten, splitterförmigen Partikeln besteht.

Die ICP-Emissionsspektroskopie in einem Perkin Elmer Optima 7300 DV ergab einen Anteil von 340 mg/g Eisen in der Probe.

### Beispiel 2

Aus einem näherungsweise kugelförmigen Polysilicium-Granulat (Hersteller Wacker Chemie AG), das weniger als 10 µg/g metallischen Verunreinigungen enthält, wurde eine Fraktion von 0,3 mm bis 0,5 mm ausgesiebt.

Der Mahlraum einer Labor-Rührwerkskugelmühle Netzsch LabStar LS1 mit Mahlsystem ZETA Keramik wurde mit 490 ml dieser Fraktion befüllt und verschlossen.

Es wurde eine Mischung aus 1600 g Ethanol (Reinheit 99,9%) und 400 g eines Siliciumpulvers mit weniger als 10 µg/g metallischen Verunreinigungen hergestellt.

Das Siliciumpulver hatte nach Vormahlung in einer Fließbettstrahlmühle eine Partikelgrößenverteilung von d₁₀ = 8 µm, d₅₀ = 15 µm und d₉₀ = 25 µm.

Die Mischung wurde 20 min gerührt, bis der gesamte Feststoff in der Suspension fein verteilt vorlag.

Danach wurde die Suspension aus Siliciumpulver und Ethanol in den gekühlten Ansatzbehälter der Mühle gefüllt und mit einem Durchsatz von 40 kg/h im Kreis durch die Mühle gepumpt.

Die Partikel in der Suspension wurden 300 min bei einer Mühlendrehzahl von 4000 U/min gemahlen.

Die anschließende Messung der Partikelverteilung durch statische Laserstreuung mit einem Horiba LA 950 ergab eine Größenverteilung mit d₁₀ = 90 nm, d₅₀ = 174 nm und d₉₀ = 320 nm in einer stark verdünnten Suspension in Ethanol.

Ca. 5 ml der Suspension wurden 16 h in einem Vakuumtrockenschrank bei 120°C und 20 mbar getrocknet.

Die REM-Aufnahmen des gemahlenen Si-Pulvers zeigten, dass die Probe aus einzelnen, nicht aggregierten, splitterförmigen Partikeln besteht.

REM-Aufnahmen des Polysilicium-Granulats zeigten keine sichtbaren Veränderungen an den Mahlkörpern.

Die Masse des Granulats nahm jedoch um ca. 14% ab.

Mit dem getrockneten Pulver aus der Suspension wurde ICP-Emissionsspektroskopie in einem Perkin Elmer Optima 7300 DV durchgeführt.

Es wurde nur eine geringe Kontamination von 70 µg/g Eisen gefunden.

Im Vergleich zu **Beispiel 1** bietet diese Methode den Vorteil, dass größere Mengen von Si-Nanopartikeln von einigen kg bis hin zum industriellen Maßstab herstellbar sind.

### Vergleichsbeispiel 2a

Der Mahlraum einer Labor-Rührwerkskugelmühle Netzsch LabStar LS1 mit Mahlsystem ZETA Keramik wurde mit 490 ml Yttriumoxid-teilstabilisierten Zirkonoxid-Mahlperlen mit einem mittleren Durchmesser von 0,3 mm (Alpine Power Beads YSZ) befüllt und verschlossen.

Es wurde eine Mischung aus 1600 g Ethanol (Reinheit 99,9%) und 400 g eines Siliciumpulvers mit weniger als 10 µg/g metallischen Verunreinigungen hergestellt.

Das Siliciumpulver hatte nach Vormahlung in einer Fließbettstrahlmühle eine Partikelgrößenverteilung von d₁₀ = 7 µm, d₅₀ = 13 µm und d₉₀ = 24 µm.

Die Mischung wurde 20 min gerührt, bis der gesamte Feststoff in der Suspension fein verteilt vorlag.

Danach wurde die Suspension aus Siliciumpulver und Ethanol in den gekühlten Ansatzbehälter der Mühle gefüllt und mit einem Durchsatz von 40 kg/h im Kreis durch die Mühle gepumpt.

Die Partikel in der Suspension wurden 250 min bei einer Mühlendrehzahl von 2500 U/min gemahlen.

Die anschließende Messung der Partikelverteilung durch statische Laserstreuung mit einem Horiba LA 950 ergab eine Größenverteilung mit d₁₀ = 82 nm, d₅₀ = 166 nm und d₉₀ = 325 nm in einer stark verdünnten Suspension in Ethanol.

Ca. 5 ml der Suspension wurden 16 h in einem Vakuumtrockenschrank bei 120°C und 20 mbar getrocknet.

Die REM-Aufnahmen des gemahlenen Si-Pulvers zeigten, dass die Probe aus einzelnen, nicht aggregierten, splitterförmigen Partikeln besteht.

REM-Aufnahmen der Zirkonoxid-Mahlperlen zeigten keine sichtbaren Veränderungen nach der Mahlung.

Eine Massenabnahme der Mahlkörper war im Rahmen des Messfehlers ebenfalls nicht festzustellen und kann daher mit weniger als 2% abgeschätzt werden.

Mit dem getrockneten Pulver aus der Suspension wurde ICP-Emissionsspektroskopie in einem Perkin Elmer Optima 7300 DV durchgeführt.

Es wurden 6 mg/g Zirkon und 65 µg/g Eisen in der Probe nachgewiesen.

### Beispiel 3

Aus einem näherungsweise kugelförmigen Polysilicium-Granulat (Hersteller Wacker Chemie AG), das weniger als 10 µg/g metallischen Verunreinigungen enthält, wurde eine Fraktion von 2 mm bis 3,15 mm ausgesiebt.

Der Mahlraum einer Rührwerkmühle Netzsch LMZ 2 mit Mahlsystem ZETA in PU-Ausführung wurde mit 1000 ml dieser Fraktion befüllt und verschlossen.

Es wurde eine Suspension aus 25 kg Ethanol (Reinheit 99,9%) und 7,5 kg eines Siliciumpulvers mit weniger als 10 µg/g metallischen Verunreinigungen hergestellt.

Das Siliciumpulver hatte nach Vormahlung in einer Fließbettstrahlmühle eine Partikelgrößenverteilung von d₁₀ = 18 µm, d₅₀ = 96 µm und d₉₀ = 226 µm.

Das Ethanol wurde in den gekühlten Ansatzbehälter der Mühle gefüllt und das Siliciumpulver unter Rühren langsam zugegeben.

Die Suspension wurde mit einem Durchsatz von 200 kg/h im Kreis durch die Mühle gepumpt.

Die Partikel in der Suspension wurden 140 min bei einer Mühlendrehzahl von 1900 U/min gemahlen.

Die anschließende Messung der Partikelverteilung durch statische Laserstreuung mit einem Horiba LA 950 ergab eine Größenverteilung mit d₁₀ = 3 µm, d₅₀ = 7,3 µm und d₉₀ = 13 µm in einer stark verdünnten Suspension in Ethanol.

Ca. 5 ml der Suspension wurden 16 h in einem Vakuumtrockenschrank bei 120°C und 20 mbar getrocknet.

Die REM-Aufnahmen des gemahlenen Si-Pulvers zeigten, dass die Probe aus einzelnen, nicht aggregierten, splitterförmigen Partikeln besteht.

REM-Aufnahmen des Polysilicium-Granulats zeigten keine sichtbaren Veränderungen an den Mahlkörpern.

Die Masse des Granulats nahm jedoch um ca. 16% ab.

Mit dem getrockneten Pulver aus der Suspension wurde ICP-Emissionsspektroskopie in einem Perkin Elmer Optima 7300 DV durchgeführt.

Es wurde nur eine geringe Kontamination von ca. 100 µg/g Eisen gefunden.

### Beispiel 4

Aus einem metallurgischen Silicium-Splitt mit weniger als 20 mg/g metallischen Verunreinigungen (Hersteller Wacker Chemie AG) wurde eine Fraktion von 2 mm bis 3,15 mm ausgesiebt.

Der Mahlraum einer Rührwerkmühle Netzsch LMZ 2 mit Mahlsystem ZETA in PU-Ausführung wurde mit 1000 ml dieser Fraktion befüllt und verschlossen.

Es wurde eine Suspension aus 25 kg Ethanol (Reinheit 99,9%) und 10 kg eines Siliciumpulvers mit weniger als 10 µg/g metallischen Verunreinigungen hergestellt.

Das Siliciumpulver hatte nach Vormahlung in einer Fließbettstrahlmühle eine Partikelgrößenverteilung von d₁₀ = 18 µm, d₅₀ = 96 µm und d₉₀ = 226 µm.

Das Ethanol wurde in den gekühlten Ansatzbehälter der Mühle gefüllt und das Siliciumpulver unter Rühren langsam zugegeben.

Die Suspension wurde mit einem Durchsatz von 200 kg/h im Kreis durch die Mühle gepumpt.

Die Partikel in der Suspension wurden 480 min bei einer Mühlendrehzahl von 1950 U/min gemahlen.

Die anschließende Messung der Partikelverteilung durch statische Laserstreuung mit einem Horiba LA 950 ergab eine Größenverteilung mit d₁₀ = 2,8 µm, d₅₀ = 7,4 µm und d₉₀ = 14 µm in einer stark verdünnten Suspension in Ethanol.

Ca. 5 ml der Suspension wurden 16 h in einem Vakuumtrockenschrank bei 120°C und 20 mbar getrocknet.

Die REM-Aufnahmen des gemahlenen Si-Pulvers zeigten, dass die Probe aus einzelnen, nicht aggregierten, splitterförmigen Partikeln besteht.

Der Silicium-Splitt wurde beim Mahlen abgeschliffen und verrundet. Seine Masse nahm um ca. 30% ab.

Mit dem getrockneten Pulver aus der Suspension wurde ICP-Emissionsspektroskopie in einem Perkin Elmer Optima 7300 DV durchgeführt.

Es wurde im Vergleich zu Beispiel 3 eine etwas höhere Kontamination von ca. 260 µg/g Eisen, 120 µg/g Aluminium und 50 µg/g Kalzium gefunden.

### Referenzbeispiel 5: Herstellen und Charakterisieren einer Elektrode für Li-Ionenbatterien

4,28 g einer 18,7 Gew.%igen Si-Suspension in Ethanol nach **Beispiel 2** und 0,48 g Leitruß (Timcal, Super P Li) wurden in 24,32 g einer 1,3 Gew.%igen Lösung von Natrium-Carboxymethylcellulose (Daicel, Grade 1380) in Wasser mittels Dissolver bei einer Umlaufgeschwindigkeit von 4,5 m/s für 15 min unter Kühlung bei 20°C dispergiert.

Nach Zugabe von 2,41 g Graphit (Timcal, SFG6) wurde dann 45 min bei einer Umlaufgeschwindigkeit von 17 m/s gerührt.

Nach Entgasen wurde die Dispersion mittels eines Filmziehrahmens mit 0,10 mm Spalthöhe (Erichsen, Modell 360) auf eine Kupferfolie (Schlenk Metallfolien, SE-Cu58) mit Dicke von 0,030 mm aufgebracht.

Die so hergestellte Elektrodenbeschichtung wurde anschließend 60 min bei 80°C getrocknet.

Das mittlere Flächengewicht der trockenen Elektrodenbeschichtung betrug 0,90 mg/cm².

Die elektrochemischen Untersuchungen wurden an einer Halbzelle in Drei-Elektroden-Anordnung (stromlose Potentialmessung) durchgeführt.

Die Elektrodenbeschichtung wurde als Arbeitselektrode eingesetzt, eine Lithium-Folie (Rockwood Lithium, Dicke 0,5mm) als Referenz- und Gegenelektrode verwendet.

Ein mit 100 µl Elektrolyt getränkter, 6-lagiger Vliesstoffstapel (Freudenberg Vliesstoffe, FS2226E) diente als Separator.

Der verwendete Elektrolyt bestand aus einer 1-molaren Lösung von Lithiumhexafluorophosphat in einem 3:7 (v/v) Gemisch von Ethylencarbonat und Diethylcarbonat, welche mit 2 Gew.% Vinylencarbonat versetzt war.

Der Bau der Zelle erfolgte in einer Glovebox (< 1 ppm H₂O, O₂), der Wassergehalt in der Trockenmasse aller verwendeten Komponenten lag unterhalb von 20 ppm.

Die elektrochemische Testung wurde bei 20°C durchgeführt.

Als Potentialgrenzen wurden 40 mV und 1,0 V vs. Li/Li⁺ verwendet.

Das Laden bzw. Lithiieren der Elektrode erfolgte im cc/cv-Verfahren (constant current / constant voltage) mit konstantem Strom und nach Erreichen der Spannungsgrenze mit konstanter Spannung bis Unterschreiten eines Stroms von 50 mA/g.

Das Entladen bzw. Delithiieren der Elektrode erfolgte im cc-Verfahren (constant current) mit konstantem Strom bis Erreichen der Spannungsgrenze.

Bei einem spezifische Strom von 100 mA/g bezogen auf das Gewicht der Elektrodenbeschichtung wurde damit eine reversible Anfangskapazität von etwa 600 mAh/g erreicht.

Nach 100 Lade-/Entladezyklen hatte die Batterie noch ungefähr 95 % ihrer ursprünglichen Kapazität.

## Patentansprüche

1. Verfahren zum Zerkleinern von Silicium, bei dem ein Gemisch enthaltend eine Suspension mit einem zu zerkleinernden Silicium und Mahlkörper aus Silicium im Mahlraum einer Mahlkörpermühle in Bewegung versetzt werden.

2. Verfahren nach Anspruch 1, **dadurch gekennzeichnet, daß** ein Median d₅₀ der Durchmesser der Mahlkörper aus Silicium 10 bis 1000 mal größer ist als der d₉₀-Wert einer Partikelgrößenverteilung des zu zerkleinernden Siliciums.

3. Verfahren nach Anspruch 1 oder nach Anspruch 2, wobei es sich bei dem zu zerkleinernden Silicium um elementares Silicium, dotiertes Silicium, metallurgisches Silicium, Siliciumoxid oder um eine binäre, ternäre oder multinäre Silicium/Metall-Legierung handelt.

4. Verfahren nach einem der Ansprüche 1 bis 3, wobei das zu zerkleinernde Silicium eine volumengewichtete Partikelgrößenverteilung mit einem d₉₀ < 300 µm aufweist.

5. Verfahren nach einem der Ansprüche 1 bis 4, wobei es sich bei den Mahlkörpern um Siliciumpartikel, **gekennzeichnet durch** runde Kanten mit ungefähr gleichen Ausmaßen in den drei Dimensionen, handelt.

6. Verfahren nach Anspruch 5, wobei die Mahlkörper aus Silicium eine volumengewichtete Größenverteilung im Bereich von 50 µm < d₅₀ < 5 mm und eine relative Breite der Verteilung von (d₉₀ - d₁₀) / d₅₀ < 1 aufweisen.

7. Verfahren nach einem der Ansprüche 1 bis 6, wobei die Suspension mit dem zu zerkleinernden Silicium eine Flüssigkeit mit einer Viskosität von weniger als 100 mPas bei 20°C umfasst.

## Claims

1. Process for comminuting silicon, wherein a mixture containing a suspension comprising a silicon to be comminuted and milling media composed of silicon is set into motion in the milling space of a milling medium mill.

2. Process according to Claim 1, **characterized in that** a median d₅₀ of the diameters of the milling media composed of silicon is from 10 to 1000 times greater than the d₉₀ value of a particle size distribution of the silicon to be comminuted.

3. Process according to Claim 1 or according to Claim 2, wherein the silicon to be comminuted is elemental silicon, doped silicon, metallurgical silicon, silicon oxide or a binary, ternary or multinary silicon-metal alloy.

4. Process according to any of Claims 1 to 3, wherein the silicon to be comminuted has a volume-weighted particle size distribution having a d₉₀ < 300 µm.

5. Process according to any of Claims 1 to 4, wherein the milling media are silicon particles **characterized by** round edges with approximately equal measurements in the three dimensions.

6. Process according to Claim 5, wherein the milling media composed of silicon have a volume-weighted size distribution in the range of 50 µm < d₅₀ < 5 mm and a relative width of the distribution of (d₉₀ - d₁₀) / d₅₀ < 1.

7. Process according to any of Claims 1 to 6, wherein the suspension comprising the silicon to be comminuted comprises a liquid having a viscosity of less than 100 mPas at 20°C.

## Revendications

1. Procédé de broyage de silicium, selon lequel un mélange contenant une suspension avec un silicium à broyer et des corps de broyage en silicium est mis en mouvement dans la chambre de broyage d'un broyeur à corps de broyage.

2. Procédé selon la revendication 1, **caractérisé en ce qu'**une médiane d₅₀ du diamètre des corps de broyage en silicium est 10 à 1 000 fois plus grande que la valeur d₉₀ d'une distribution des tailles de particules du silicium à broyer.

3. Procédé selon la revendication 1 ou la revendication 2, **caractérisé en ce que** le silicium à broyer est du silicium élémentaire, du silicium dopé, du silicium métallurgique, de l'oxyde de silicium ou un alliage silicium/métal binaire, ternaire ou multinaire.

4. Procédé selon l'une quelconque des revendications 1 à 3, **caractérisé en ce que** le silicium à broyer présente une distribution des tailles de particules moyennée en volume ayant un d₉₀ < 300 µm.

5. Procédé selon l'une quelconque des revendications 1 à 4, **caractérisé en ce que** les corps de broyage sont des particules de silicium **caractérisées par** des bords arrondis ayant des dimensions approximativement identiques dans les trois dimensions.

6. Procédé selon la revendication 5, dans lequel les corps de broyage en silicium présentent une distribution de taille moyennée en volume dans la plage de 50 µm < d₅₀ < 5 mm et une largeur relative de la distribution de (d₉₀-d₁₀)/d₅₀ < 1.

7. Procédé selon l'une quelconque des revendications 1 à 6, dans lequel la suspension avec le silicium à broyé comprend un liquide ayant une viscosité inférieure à 100 mPas à 20 °C.
